# FASCICULE DE BREVET EUROPEEN

(11) **EP 3 687 834 B1**
(45) Date de publication et mention de la délivrance du brevet: **26.05.2021**
(21) Numéro de dépôt: 18789198.1
(22) Date de dépôt: 21.09.2018
(51) Int. Cl.: B60C 1/00, C09J 107/02, C08L 9/08, C08L 61/12, C08K 3/24, C09J 161/12, B65G 15/36

(54) **PROCÉDÉ DE FABRICATION D'UNE COMPOSITION ADHÉSIVE AQUEUSE SANS AMMONIAQUE AJOUTÉ**
VERFAHREN ZUR HERSTELLUNG EINER WÄSSRIGEN KLEBSTOFFZUSAMMENSETZUNG OHNE ZUSATZ VON AMMONIAKLÖSUNG
PROCESS FOR MANUFACTURING AN AQUEOUS ADHESIVE COMPOSITION WITHOUT ADDED AMMONIA SOLUTION

(30) Priorité: 29.09.2017 FR 1759106
(43) Date de publication de la demande: 05.08.2020
(73) Titulaire: Compagnie Générale des Etablissements Michelin, 63000 Clermont-Ferrand (FR)
(72) Inventeur: MICHOUD, Clément, 63040 Clermont-Ferrand Cedex 9 (FR)
(74) Mandataire: Louret, Sylvain
(86) Numéro de dépôt international: PCT/FR2018/052310
(87) Numéro de publication internationale: WO 2019/063915

(56) Documents cités:
- WO-A1-2013/017422
- WO-A1-2013/017423

## Description

Le domaine de la présente invention est celui des éléments de renfort et des compositions adhésives ou « colles » destinées à faire adhérer de tels éléments de renfort à des matrices élastomériques telles que celles utilisées couramment dans les articles ou produits semi-finis en élastomère ou encore dans le domaine des pneumatiques ou des courroies.

La présente invention est plus particulièrement relative à un procédé de fabrication d'une composition adhésive aqueuse comprenant une étape de mélangeage d'une première phase à base d'au moins un latex d'élastomère et d'au moins un sel de phosphate et d'une deuxième phase à base d'une résine, à la composition adhésive aqueuse obtenue par ce procédé, à un élément de renfort revêtu d'au moins une couche adhésive de cette composition adhésive aqueuse, à un composite d'élastomère comprenant cet élément de renfort, ainsi qu'à un pneumatique et une courroie comprenant cet élément de renfort ou ce composite.

On connait de l'état de la technique un procédé de fabrication d'une composition adhésive aqueuse, notamment de FR2978770. Au cours de ce procédé, on mélange une première phase comprenant plusieurs latex d'élastomères et une deuxième phase comprenant une résine.

Le mélange de latex d'élastomères comprend un copolymère de butadiène, un terpolymère vinylpyridine-styrène-butadiène et du caoutchouc naturel.

Pour assurer la stabilité du caoutchouc naturel, on ajoute de l'ammoniaque postérieurement à la récolte du caoutchouc naturel.

Pour assurer la stabilité de la première phase, on ajoute également de l'ammoniaque dans la première phase lors du mélangeage des latex d'élastomères entre eux, l'ammoniaque ajouté au caoutchouc naturel étant en quantité insuffisante pour assurer la stabilité de la première phase. Pour préparer 100g de première phase, on ajoute lors du mélangeage des latex d'élastomères 3,69 g d'une solution d'ammoniaque concentré à 21% en masse obtenu par dissolution d'ammoniaque gazeux dans de l'eau. Ainsi, la quantité d'ammoniaque ajoutée pour stabiliser la première phase est de 0,77 g pour préparer 100g de première phase.

On prépare également une deuxième phase comprenant de l'eau et une résine à base de formaldéhyde et de résorcinol.

On prépare la composition adhésive aqueuse en mélangeant la première phase et la deuxième phase. Les première et deuxième phases sont mélangées sous agitation pendant 1 à 30 min à 20°C. Lors d'une dernière étape de fabrication, dite de maturation, la composition adhésive aqueuse est généralement stockée à température ambiante (23°C) pendant un temps de maturation pouvant varier typiquement de une à plusieurs heures voire plusieurs jours, avant son utilisation finale.

L'ammoniaque ajoutée au caoutchouc naturel représente alors un taux massique égal à 0,05% de la composition adhésive aqueuse. L'ammoniaque ajoutée au mélange de latex d'élastomères représente alors un taux massique égal à 0,50% de la composition adhésive aqueuse. La somme d'ammoniaque ajouté au caoutchouc naturel et au mélange de latex d'élastomères représente alors un taux massique égal à 0,55% de la composition adhésive aqueuse.

L'utilisation d'ammoniaque pour assurer la stabilité, d'une part, du caoutchouc naturel et, d'autre part, du mélange de latex d'élastomères nécessite la mise en oeuvre de précautions liées à la nocivité, aux propriétés irritantes de l'ammoniaque et sa nature gazeuse à température ambiante et à pression atmosphérique.

Ainsi, les concepteurs de compositions adhésives, notamment les manufacturiers de pneumatiques et d'articles élastomériques, ont pour objectif aujourd'hui de trouver de nouveaux procédés et compositions permettant de faire adhérer de façon satisfaisante les éléments de renfort aux matrices d'élastomères sans que celles-ci ne nécessite l'utilisation d'ammoniaque dont il est souhaitable de diminuer les quantités utilisées.

L'invention a pour objet un procédé de fabrication d'une composition adhésive aqueuse utilisant autant peu d'ammoniaque que faire se peut.

Or, au cours de leurs recherches, la Demanderesse a découvert un procédé de fabrication d'une composition adhésive aqueuse permettant une adhésion satisfaisante et de réduire la quantité d'ammoniaque utilisée et qui permet donc de répondre à l'objectif ci-dessus.

A cet effet, l'invention a pour objet un procédé de fabrication d'une composition adhésive aqueuse, dans lequel:
- on prépare une première phase en mélangeant au moins un latex d'élastomère et au moins un sel de phosphate S1;
- on prépare une deuxième phase comprenant une résine à base de:
   ∘ au moins un composé A1, le composé A1 étant choisi parmi :
      - un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
      - un composé A12 comprenant au moins un noyau aromatique porteur d'au moins une fonction aldéhyde ou
      - un mélange d'un composé A11 et d'un composé A12 ; et
   ∘ au moins un phénol A2; et
   on prépare la composition adhésive aqueuse en mélangeant la première phase et la deuxième phase de sorte que l'ammoniaque soit à un taux massique inférieur strictement à 0,55% de la composition adhésive aqueuse.

Le sel de phosphate permet de remplacer l'ammoniaque pour assurer la fonction de stabilisation de la première phase sans pour autant altérer les propriétés d'adhésion de la composition adhésive aqueuse.

Un autre objet de l'invention concerne une composition adhésive aqueuse obtenue par le procédé tel que défini précédemment.

L'invention concerne également un élément de renfort revêtu d'au moins une couche adhésive à base de la composition adhésive aqueuse telle que définie précédemment.

L'invention concerne également un composite d'élastomère renforcé d'au moins un élément de renfort tel que défini précédemment noyé dans une matrice d'élastomère.

L'invention concerne également un pneumatique comprenant un élément de renfort tel que défini précédemment ou un composite d'élastomère tel que défini précédemment.

L'invention concerne également une courroie comprenant un élément de renfort tel que défini précédemment ou un composite d'élastomère tel que défini précédemment.

Par pce, on entend parties en poids pour cent parties d'élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

L'invention ainsi que ses avantages seront aisément compris à la lumière de la description et des exemples de réalisation qui suivent.

Dans la présente description, sauf indication expresse différente, tous les pourcentages (%) indiqués sont des % en masse.

Par composition d'élastomère, on entend une composition comprenant au moins un élastomère (ou indistinctement caoutchouc) et au moins un autre constituant.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Par matrice élastomérique, on entend une matrice à comportement élastomérique.

Par "position méta l'une par rapport à l'autre", on entendra que les fonctions hydroxyle sont portées par des carbones du noyau aromatique séparés l'un de l'autre par un unique autre carbone du noyau aromatique.

Par "en position ortho d'une fonction", on entendra la position occupée par le carbone du noyau aromatique immédiatement adjacent au carbone du noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH2OH » représente la fonction hydroxyméthyle.

Par « polyphénol aromatique » on entend un composé aromatique comprenant au moins un noyau benzénique porteur de plus d'une fonction hydroxyle.

Par l'expression « résine à base de », il faut bien entendu comprendre une résine comportant le mélange et/ou le produit de la réaction entre les différents constituants de base utilisés pour la condensation finale de cette résine, de préférence uniquement le produit de la réaction entre les différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Par l'expression « couche adhésive à base de », il faut bien entendu comprendre une couche adhésive comportant le mélange et/ou le produit de réaction des différents constituants de base utilisés pour former la couche adhésive, ici les constituants de base de la composition adhésive, certains d'entre eux pouvant être destinés à réagir ou susceptibles de réagir entre eux ou avec leur environnement chimique proche, au moins en partie, lors des différentes phases de fabrication de la couche adhésive, de l'élément de renfort métallique, des composites ou articles finis, en particulier au cours d'une étape de cuisson.

Par taux d'extrait sec d'un composé, d'une phase ou de la composition adhésive aqueuse, on entend la masse du composé, de la phase ou de la composition adhésive aqueuse en grammes obtenue après séchage sur la masse en grammes de la phase ou de la composition adhésive avant séchage. Dans la présente demande, le composé dont on mesure le taux d'extrait sec est, dans les conditions de mesure de ce taux d'extrait sec, non volatil. Le taux d'extrait sec est mesuré conformément à la norme NF EN 827 (mars 2006).

Par taux massique d'un composé, on entend la masse en grammes de ce composé sur la masse en grammes de la phase ou de la composition adhésive aqueuse dans laquelle il se trouve. En particulier, le taux massique s'applique aux composés volatils dont on ne peut mesurer le taux d'extrait sec, notamment l'ammoniaque.

### PROCEDE SELON L'INVENTION

### Procédé de fabrication de la première phase

### Sels de phosphate

Lors de la préparation de la première phase de la composition adhésive aqueuse, on ajoute au moins un sel de phosphate S1.

De préférence, on prépare la composition adhésive aqueuse de sorte que l'ammoniaque soit à un taux massique de la composition adhésive aqueuse strictement inférieur à 0,50%, de préférence inférieur ou égal à 0,40% , plus préférentiellement inférieur ou égal à 0,30%, plus préférentiellement inférieur ou égal à 0,20% et encore plus préférentiellement inférieur ou égal à 0,10%.

Ainsi, il est possible de réduire fortement la quantité d'ammoniaque utilisée pour stabiliser le caoutchouc naturel et notamment pour assurer le transport de celui-ci, sans pour autant altérer les propriétés d'adhésion de la composition adhésive aqueuse.

Dans un mode de réalisation, on prépare la composition adhésive aqueuse de sorte que l'ammoniaque soit à un taux massique de la composition adhésive aqueuse strictement inférieur ou égal à 0,05%.

Dans un autre mode de réalisation, on prépare la composition adhésive aqueuse de sorte que l'ammoniaque soit à un taux massique de la composition adhésive aqueuse supérieur ou égal à 0,05%.

Dans cet autre mode de réalisation, l'ammoniaque permet de stabiliser le caoutchouc naturel et notamment pour assurer son transport. Ici, on ne rajoute pas d'ammoniaque dans le ou les latex qui sont stabilisés par le ou les sels de phosphate S1.

De préférence, le ou chaque sel de phosphate S1 est choisi parmi le phosphate de sodium, le phosphate de potassium et les mélanges de ces phosphates et de préférence est le phosphate de sodium.

Les sels de phosphate de sodium et de potassium présentent l'avantage d'être solubles dans des conditions de températures et de pressions courantes. Ainsi, ces sels de phosphate sont solubles dans la composition à un taux massique supérieur ou égal à 1g/L dans la composition, de préférence à 10 g/L. Cette solubilité est mesurée dans des conditions standards, à savoir 23°C à pression atmosphérique par le protocole suivant. On prépare la composition comprenant l'ensemble de ses constituants à l'exception du ou des sels de phosphate dont on souhaite mesure la solubilité. On pèse avec une balance de précision (0,0001g) environ exactement X g de solide à mesurer. On introduit ensuite le solide dans un erlenmeyer et on ajoute progressivement la composition préparée dans l'erlenmeyer en agitant. Dès lors que le solide est visiblement dissous, on mesure le volume final V de la composition préparée. Le rapport de la masse X au volume V indique la solubilité.

Dans un premier mode de réalisation où le sel de phosphate S1 est le phosphate de sodium, lors de l'étape de préparation de la première phase, on mélange le phosphate de sodium de sorte que le taux d'extrait sec de phosphate de sodium dans la première phase soit inférieur ou égal à 3,50%, de préférence inférieur ou égal à 3,00%, plus préférentiellement inférieur ou égal à 2,50% et encore plus préférentiellement inférieur ou égal à 2,00%.

Dans ce même premier mode de réalisation, lors de l'étape de préparation de la première phase, on mélange le phosphate de sodium de sorte que le taux d'extrait sec de phosphate de sodium dans la première phase soit supérieur ou égal à 0,50%, de préférence supérieur ou égal à 0,60% et plus préférentiellement supérieur ou égal à 0,90%.

Dans un deuxième mode de réalisation où le sel de phosphate S1 est le phosphate de potassium, lors de l'étape de préparation de la première phase, on mélange le phosphate de potassium de sorte que le taux d'extrait sec de phosphate de potassium dans la première phase soit inférieur ou égal à 4,50%, de préférence inférieur ou égal à 3,50%, plus préférentiellement inférieur ou égal à 3,00% et encore plus préférentiellement inférieur ou égal à 2,50%.

Dans ce même deuxième mode de réalisation, lors de l'étape de préparation de la première phase, on mélange le phosphate de potassium de sorte que le taux d'extrait sec de phosphate de potassium dans la première phase soit supérieur ou égal à 0,60%, de préférence supérieur ou égal à 0,75% et plus préférentiellement supérieur ou égal à 1,20%.

### Latex d'élastomère

Lors de la préparation de la première phase de la composition adhésive aqueuse, on ajoute un latex d'élastomère, de préférence insaturé. Un tel latex d'élastomère permet d'assurer une interface physique élastomérique lorsque la composition adhésive est utilisée pour le revêtement d'élément destinés à être noyés dans une matrice d'élastomère. Lorsque le latex d'élastomère est insaturé, il assure également une interface chimique grâce aux insaturations susceptibles de former des ponts avec le système de réticulation de la matrice d'élastomère.

Avantageusement, le taux d'extrait sec du ou des latex d'élastomère(s) dans la première phase va de 40 à 90 %, de préférence de 50 à 80%, et plus préférentiellement de 60 à 70%.

De préférence, le taux d'extrait sec du ou des latex d'élastomère(s) dans la composition adhésive aqueuse va de 3,0 à 29,0 %, de préférence de 11,0 à 24,0 % et plus préférentiellement de 13,0 à 21,0 %.

On rappelle qu'un latex est une dispersion stable de microparticules d'élastomère(s) en suspension dans une solution généralement aqueuse. Un latex d'élastomère est donc une composition dans un état liquide comprenant un solvant liquide, généralement de l'eau, et au moins un élastomère ou un caoutchouc dispersé dans le solvant liquide de façon à former une suspension. Ainsi, le latex n'est pas une composition de caoutchouc qui comprend une matrice d'élastomère ou de caoutchouc dans laquelle est dispersé au moins un autre composant. Une composition de caoutchouc est dans un état plastique à l'état cru (non-réticulé) et dans un état élastique à l'état cuit (réticulé) mais en aucun cas dans un état liquide comme l'est un latex.

Les latex d'élastomère insaturé (c'est-à-dire porteur de doubles liaisons carbone-carbone), notamment d'élastomère diénique, sont bien connus de l'homme du métier. Ils constituent notamment la base élastomérique des colles RFL décrites en introduction du présent mémoire.

L'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères. Très préférentiellement, le ou les latex d'élastomère(s) insaturé(s) comprennent au moins du caoutchouc naturel.

### Procédé de fabrication de la deuxième phase

La deuxième phase de la composition adhésive aqueuse est préparée par le mélangeage d'une résine, d'eau et d'éventuels autres constituants.

Avantageusement, on prépare la deuxième phase en mélangeant la résine et au moins une base.

### Base

De préférence, la base est choisie parmi les hydroxydes, les sels de phosphate et les mélanges d'un ou plusieurs hydroxydes et d'un ou plusieurs sels de phosphate.

Dans une première alternative, la base est un sel de phosphate S2.

Avantageusement, la base étant choisie parmi les sels de phosphate, on prépare la deuxième phase en mélangeant la résine et un sel de phosphate S2 de sorte que le ou les sels de phosphate S2 sont choisis parmi le phosphate de sodium, le phosphate de potassium et les mélanges de ces phosphates et de préférence est le phosphate de sodium.

Dans un premier mode de réalisation où la base est le phosphate de sodium, on prépare la deuxième phase en mélangeant la résine et le phosphate de sodium de sorte que le taux d'extrait sec de phosphate de sodium dans la deuxième phase soit inférieur ou égal à 5,00%, de préférence inférieur ou égal à 4,50%, plus préférentiellement inférieur ou égal à 4,00% et encore plus préférentiellement inférieur ou égal à 3,50%.

Dans ce même premier mode de réalisation où la base est le phosphate de sodium, on prépare la deuxième phase en mélangeant la résine et le phosphate de sodium de sorte que le taux d'extrait sec de phosphate de sodium dans la deuxième phase soit supérieur ou égal à 2,00%, de préférence supérieur ou égal à 2,50% et plus préférentiellement supérieur ou égal à 3,00%.

Dans un deuxième mode de réalisation où la base est le phosphate de potassium, on prépare la deuxième phase en mélangeant la résine et le phosphate de potassium de sorte que le taux d'extrait sec de phosphate de potassium dans la deuxième phase soit inférieur ou égal à 5,50%, de préférence inférieur ou égal à 5,00%, plus préférentiellement inférieur ou égal à 4,50% et encore plus préférentiellement inférieur ou égal à 4,10%.

Dans ce même deuxième mode de réalisation où la base est le phosphate de potassium, on prépare la deuxième phase en mélangeant la résine et le phosphate de potassium de sorte que le taux d'extrait sec de phosphate de potassium dans la deuxième phase soit supérieur ou égal à 3,00%, de préférence supérieur ou égal à 3,50% et plus préférentiellement supérieur ou égal à 3,90%.

Dans une deuxième alternative, la base est un hydroxyde métallique.

Avantageusement, la base étant choisie parmi les hydroxydes, on prépare la deuxième phase en mélangeant la résine et un hydroxyde de sorte que l'hydroxyde est choisi parmi les hydroxydes métalliques et de préférence est l'hydroxyde de sodium.

Dans un mode de réalisation où la base est l'hydroxyde de sodium, on prépare la deuxième phase en mélangeant la résine et l'hydroxyde de sodium de sorte que le taux d'extrait sec d'hydroxyde de sodium dans la deuxième phase soit inférieur ou égal à 5,00%, de préférence inférieur ou égal à 4,00%, plus préférentiellement inférieur ou égal à 3,50% et encore plus préférentiellement inférieur ou égal à 3,00%.

Dans ce même mode de réalisation où la base est l'hydroxyde de sodium, on prépare la deuxième phase en mélangeant la résine et l'hydroxyde de sodium de sorte que le taux d'extrait sec d'hydroxyde de sodium dans la deuxième phase soit supérieur ou égal à 1,00%, de préférence supérieur ou égal à 1,50% et plus préférentiellement supérieur ou égal à 2,00%.

Dans une troisième alternative, la base est un mélange de sels de phosphate et d'hydroxydes métalliques.

### Résine

Avantageusement, on prépare la deuxième phase en mélangeant au moins de l'eau et la résine de sorte que le taux d'extrait sec de la résine dans la deuxième phase va de 2 à 16 %, de préférence de 5 à 14 % et plus préférentiellement de 7 à 11 %.

Avantageusement, on prépare la composition adhésive aqueuse en mélangeant la première phase et la deuxième phase de sorte que le taux d'extrait sec de la résine dans la composition adhésive aqueuse va de 1,0 à 5,0 %, de préférence de 1,5 à 3,0 % et plus préférentiellement de 2,0 à 4,0 %.

Ainsi, on assure une adhésion suffisante pour la plupart des applications de la composition adhésive aqueuse.

Avantageusement, la résine est préparée à partir d'au moins un composé A1 et d'au moins un phénol A2 qui sont décrits ci-après.

Conformément à l'invention, les constituants de base de la résine comprennent donc au moins un composé A1 et au moins un phénol A2. Dans un mode de réalisation, les constituants de base peuvent comprendre d'autres constituants additionnels différents du composé A1 et du phénol A2. Dans un autre mode de réalisation, les constituants de base sont constitués d'au moins un composé A1 et d'au moins un phénol A2.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 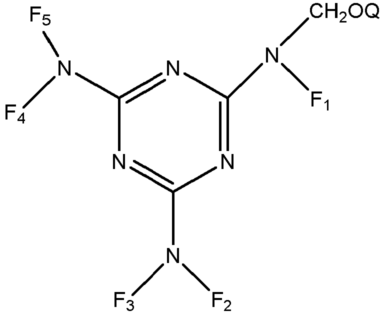 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des composés A1 dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des composés A1 dans les constituants de base est inférieur ou égal à 10%, de préférence à 5%, plus préférentiellement à 2% et encore plus préférentiellement à 1%.

Dans un mode de réalisation préférentiel, la composition adhésive comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A11 et au moins un (c'est-à-dire un ou plusieurs) phénol A2.

Dans un autre mode de réalisation préférentiel, la composition adhésive comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A12 et au moins un (c'est-à-dire un ou plusieurs) phénol A2.

Dans encore un autre mode de réalisation, la composition adhésive comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A11 et d'au moins un (c'est-à-dire un ou plusieurs) composé A12 et au moins un (c'est-à-dire un ou plusieurs) phénol A2.

### Composé A1

Un constituant essentiel de la résine de la deuxième phase de la composition adhésive aqueuse est un composé A1, le composé A1 étant choisi parmi :
- un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
- un composé A12 comprenant au moins un noyau aromatique porteur d'au moins une fonction aldéhyde ou
- un mélange d'un composé A11 et d'un composé A12.

Dans un premier mode de réalisation, le composé A12 comprend au moins un noyau aromatique porteur d'au moins une fonction aldéhyde.

Plus préférentiellement, le composé A12 est porteur d'au moins deux fonctions aldéhyde.

Encore plus préférentiellement, le noyau aromatique du composé A12 est porteur de deux fonctions aldéhydes.

Dans un mode de réalisation, le noyau aromatique du composé A12 est choisi dans le groupe constitué par un noyau benzénique et un noyau furanique, de préférence le noyau aromatique de l'aldéhyde aromatique est un noyau benzénique.

De préférence, le composé A12 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

Dans le premier mode de réalisation, le composé A12 est, dans une variante, de formule générale **(A):** 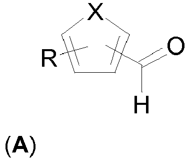 dans laquelle :
X comprend N, S ou O
R représente -H ou -CHO.

Préférentiellement, le composé A12 est de formule générale (A'):

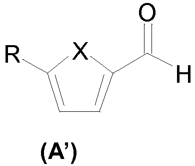

Encore plus préférentiellement, R représente -CHO.

Selon un mode de réalisation préférentiel, X représente O.

Dans une variante du composé A12 de formule générale **(A),** X représente O et R représente -H. Le composé A12 utilisé est alors de formule **(Ba):**

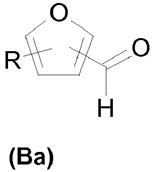

Dans une variante du composé A12 de formule générale **(A'),** X représente O et R représente -H. Le composé A12 utilisé est alors le furfuraldéhyde et est de formule **(B'a):**

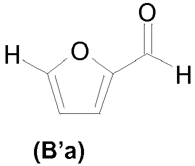

Dans une autre variante du composé A12 de formule générale **(A),** X représente O et R représente -CHO. Le composé A12 utilisé est alors de formule **(Bb):**

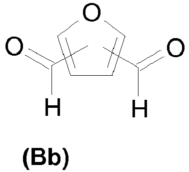

Dans une autre variante du composé A12 de formule générale **(A'),** X représente O et R représente -CHO. Le composé A12 utilisé est alors le 2,5-furanedicarboxaldéhyde et est de formule **(B'b):**

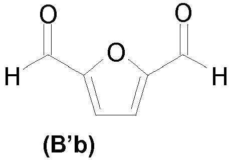

Dans un autre mode de réalisation, X comprend N.

De préférence, le composé A12 est choisi dans le groupe constitué par le furfuraldéhyde, le 2,5-furanedicarboxaldéhyde et les mélanges de ces composés.

Dans une variante du composé A12 de formule générale **(A),** X représente NH. Le composé A12 utilisé est de formule **(Ca):**

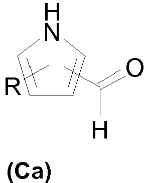

Dans une variante du composé A12 de formule générale **(A'),** X représente NH. Le composé A12 utilisé est de formule **(C'a):**

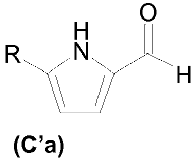

De préférence, R représente -CHO dans la variante du composé A12 de formule **(C'a)** et le composé A12 obtenu est alors le 2,5-1H-pyrroledicarboxaldéhyde.

Dans une autre variante du composé A12 de formule générale **(A),** X représente NT₁ avec T₁ représentant un groupe alkyle, aryle arylalkyle, alkylaryle ou cycloalkyle. Le composé A12 utilisé est de formule **(Cb):**

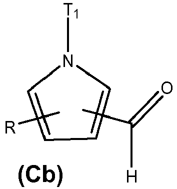

Dans un autre mode de réalisation, X comprend S.

Dans une variante du composé A12 de formule générale **(A),** X représente S. Le composé A12 utilisé est de formule **(Da):**

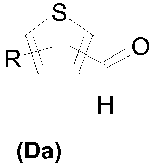

Dans une variante du composé A12 de formule générale **(A'),** X représente S. Le composé A12 utilisé est de formule **(D'a):**

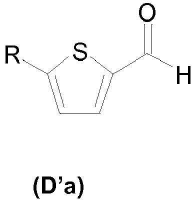

De préférence, R représente -CHO dans la variante du composé A12 de formule **(IV'a)** et est alors le 2,5-thiophènedicarboxaldéhyde.

Dans une autre variante du composé A12 de formule générale **(A),** X représente ST₂ avec T₂ représentant un groupe alkyle, aryle arylalkyle, alkylaryle ou cycloalkyle. Le composé A12 utilisé est de formule **(Db):**

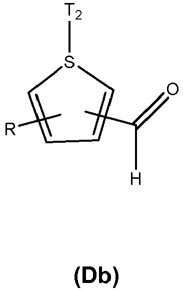

Dans encore une autre variante du composé A12 de formule générale **(A),** X représente T₃-S-T₂ avec T₂, T₃ représentant chacun indépendamment l'un de l'autre un groupe alkyle, aryle arylalkyle, alkylaryle ou cycloalkyle. Le composé A12 utilisé est de formule **(Dc):**

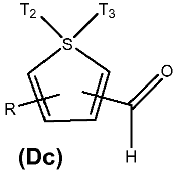

Dans encore une autre variante du composé A12 de formule générale **(A),** X représente S=O. Le composé A12 utilisé est de formule **(Dd):**

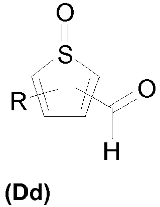

Dans encore une autre variante du composé A12 de formule générale **(A),** X représente O=S=O. Le composé A12 utilisé est de formule **(De):**

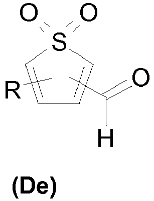

Parmi les différents modes de réalisation décrits ci-dessus, on préfèrera les modes de réalisation et les variantes dans lesquels X représente NH, S ou O. Dans ces modes de réalisation et variantes, on pourra avoir R représentant -H ou -CHO et de préférence R représentant -CHO. Dans ces modes de réalisation et variantes, on aura préférentiellement R en position 5 et le groupe -CHO en position 2 sur le noyau aromatique (formule générale **(A')**).

Dans un deuxième mode de réalisation, le composé A11 est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle.

Ainsi, dans ce deuxième mode de réalisation, c'est ledit noyau aromatique qui est porteur des fonctions hydroxyméthyle et aldéhyde. Le composé A11 répond donc, dans ce deuxième mode de réalisation, à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé A11 répond à la formule générale (II) : 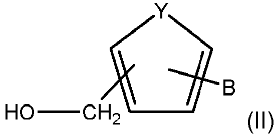 où B représente CHO ou CH₂OH, Y représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé A11 est de formule générale (II') : 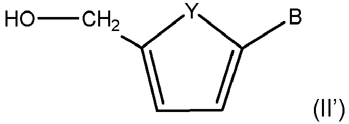 dans laquelle Y, B sont tels que définis précédemment.

Dans un mode de réalisation particulièrement avantageux, B représente CHO. Dans un autre mode de réalisation, B représente CH₂OH.

Selon un mode de réalisation préférentiel, Y représente O.

Dans une variante, le composé A11 est de formule (IIa) : 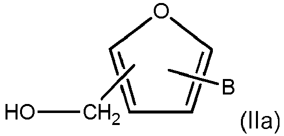 B étant tel que défini précédemment.

Et plus particulièrement, le composé A11 répond à la formule générale (II'a1) ou (II'a2) :

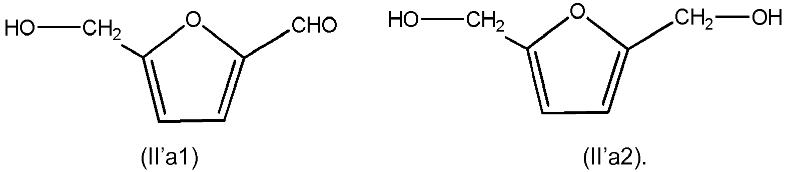

Le 5-(hydroxyméthyl)-furfural (II'a1) est un composé A11 particulièrement adapté, étant donné que ce composé organique peut facilement être issu de ressources renouvelables. En effet, il est issu notamment de la déshydratation de certains sucres tels que le fructose, le glucose, le sucrose, la cellulose et l'insuline.

Dans un autre mode de réalisation, Y représente NR₁ ou NO, avantageusement NR₁. R₁ représente un hydrogène, un groupe alkyle, aryle, arylalkyle, alkylaryle ou cycloalkyle.

Dans une variante, le composé est de formule (IIb) : 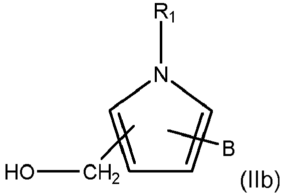 B étant tel que défini précédemment
et plus particulièrement de formule (II'b1) ou (II'b2) : 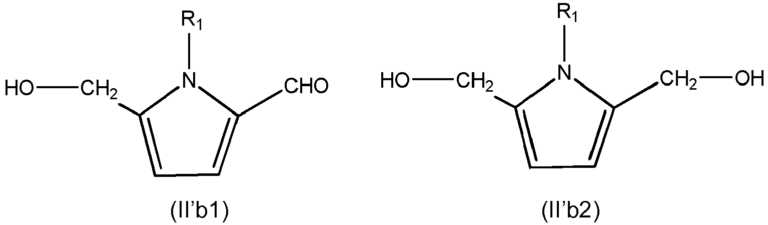 dans lesquelles R₁ est tel que défini précédemment. Avantageusement R₁ représente un hydrogène ou un groupe alkyle en C₁-C₆.

Dans un autre mode de réalisation, Y représente S, SO, SO₂ ou SR₂R₃ avec R₂ et R₃ tels que définis précédemment.

Dans une variante, le composé est de formule (IIc) :
B étant tel que défini précédemment 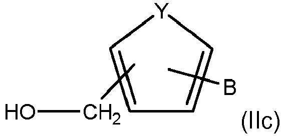
avec Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B, R₂ et R₃ étant tels étant tels que définis précédemment ;
et plus particulièrement de formule (II'c1) ou (II'c2) : 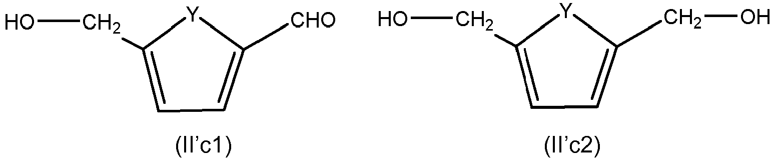
dans laquelle Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

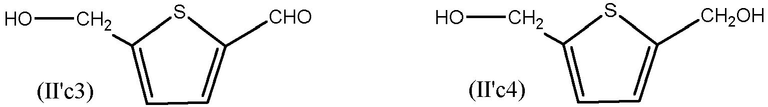

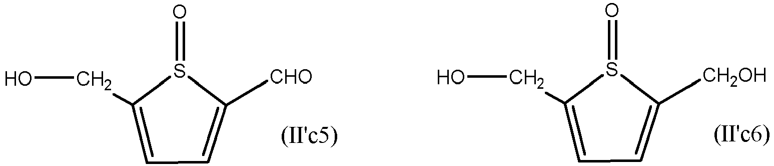

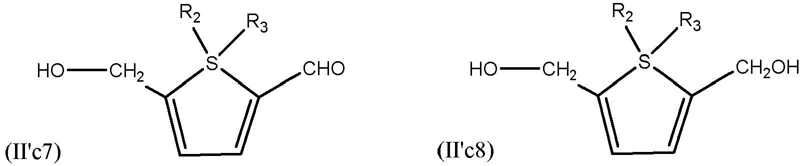

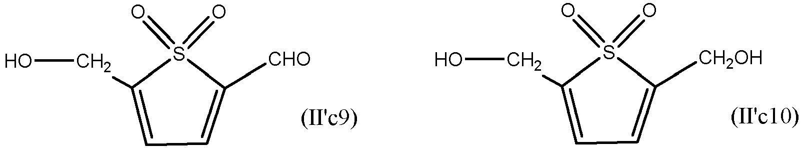

Avantageusement R₂, R₃ représentent chacun, l'un indépendamment de l'autre, un radical alkyle en C₁-C₆.

Le composé est avantageusement de formule (II'c3) ou (II'c4).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé A11 est de formule générale (III) : 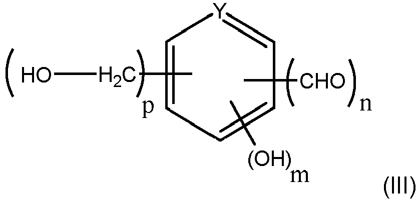 dans laquelle Y représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Ainsi, p+n>1 avec p>0.

Avantageusement R1 représente un hydrogène ou un groupe alkyle en C1-C6.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique du composé A11 est un noyau benzénique. Plus préférentiellement, cet aldéhyde est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé A11 utilisé est le 1-hydroxymethyl-benzène-4-carboxaldéhyde de formule (IIIa) ou le 1,4-hydroxymethyl-benzène de formule (IIIb) :

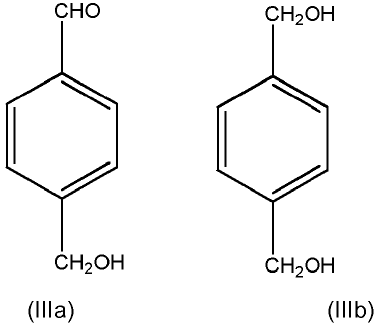

Parmi les autres avantages liés à l'utilisation des composés A11 et/ou A12, on notera que la composition adhésive peut être dépourvue de formaldéhyde dont il est souhaitable de diminuer l'utilisation, voire de la supprimer à terme dans les compositions adhésives, en raison de l'évolution récente de la réglementation européenne sur ce type de composé. En outre, le formaldéhyde est un composé dérivé du pétrole dont on souhaite le plus possible s'affranchir pour des raisons de raréfaction.

### Phénol A2

L'autre constituant essentiel de la deuxième phase de de la composition adhésive est le phénol A2.

Avantageusement, le phénol A2 est choisi parmi :
∘ un polyphénol aromatique A21 comprenant au moins un noyau aromatique porteur d'au moins deux fonctions hydroxyle en position méta l'une par rapport à l'autre, les deux positions ortho d'au moins une des fonctions hydroxyle étant non substituées
∘ un monophénol aromatique A22 comprenant au moins un noyau aromatique à six chainons portant une unique fonction hydroxyle,
   - les deux positions ortho de la fonction hydroxyle étant non substituées ou
   - au moins une position ortho et la position para de la fonction hydroxyle étant non substituées
∘ un mélange de A21 et A22.

Dans un mode de réalisation, le phénol est un polyphénol aromatique A21 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le phénol est un monophénol aromatique A22 comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées.

Dans encore un autre mode de réalisation, le phénol est un mélange du polyphénol aromatique A21 et du monophénol aromatique A22 tels que décrits ci-dessus.

Conformément à l'invention, le polyphénol aromatique A21 peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le monophénol aromatique A22 peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le polyphénol aromatique A21 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde et/ou au moins un composé comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le monophénol aromatique A22 peut être, dans un autre mode de réalisation, une résine pré-condensée à base :
- d'au moins un monophénol aromatique comprenant au moins un noyau aromatique à six chainons portant une unique fonction hydroxyle :
   ∘ les deux positions ortho de la fonction hydroxyle sont non substituées, ou
   ∘ au moins une position ortho et la position para de la fonction hydroxyle sont non substituées;
- d'au moins un composé comprenant au moins une fonction aldéhyde et/ou au moins un composé comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le phénol A2 est un mélange d'un polyphénol aromatique formant une molécule simple et d'une résine pré-condensée à base de polyphénol aromatique.

Dans encore un autre mode de réalisation, le phénol A2 est un mélange d'un monophénol aromatique formant une molécule simple et d'une résine pré-condensée à base de monophénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A21

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Avantageusement, le ou chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V):

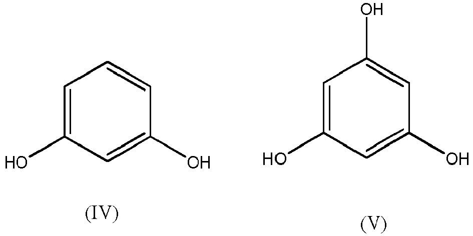

A titres d'exemples, dans le cas où le polyphénol aromatique comporte plusieurs noyaux aromatiques, au moins deux de ces noyaux aromatiques, identiques ou différents, sont choisis parmi ceux de formules générales : 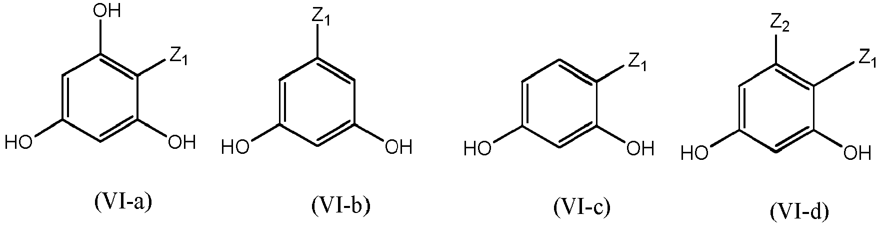 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

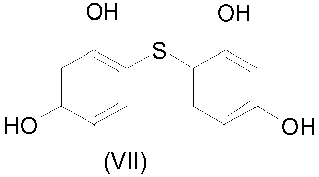

Un autre exemple de polyphénol aromatique est le 2,2',4,4'-tétrahydroxydiphényl benzophénone de formule développée suivante (VIII) :

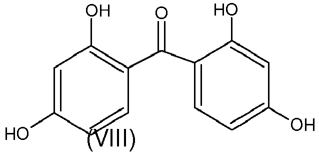

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le polyphénol aromatique A21 comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol, le phloroglucinol, le 2,2',4,4'-tétrahydroxydiphényl sulfide, la 2,2',4,4'-tétrahydroxybenzophenone, et leurs mélanges ; et
- d'au moins un composé susceptible de réagir avec le polyphénol aromatique comprenant au moins une fonction aldéhyde et/ou au moins un composé susceptible de réagir avec le polyphénol aromatique comprenant au moins deux fonctions hydroxyméthyle, et préférentiellement un aldéhyde aromatique comprenant au moins un noyau aromatique porteur d'au moins une fonction aldéhyde.

Le composé susceptible de réagir avec le polyphénol aromatique peut être un composé A1 tel que défini précédemment ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé susceptible de réagir avec le polyphénol aromatique est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le polyphénol aromatique A21 peut également comprendre un mélange d'une molécule libre de polyphénol aromatique et d'une résine pré-condensée à base de polyphénol aromatique, telle que décrite précédemment. En particulier, le polyphénol aromatique A21 peut également comprendre un mélange de phloroglucinol et d'une résine pré-condensée à base de phloroglucinol.

### Monophénol aromatique A22

Le monophénol aromatique A22 peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le monophénol aromatique A22 comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec le monophénol aromatique comprenant au moins une fonction aldéhyde et/ou au moins un composé susceptible de réagir avec le monophénol aromatique comprenant au moins deux fonctions hydroxyméthyle et préférentiellement un aldéhyde aromatique comprenant au moins un noyau aromatique porteur d'au moins une fonction aldéhyde.

Le composé susceptible de réagir avec le monophénol aromatique peut être un composé A1 tel que défini précédemment ou tout autre aldéhyde. Avantageusement, ledit composé susceptible de réagir avec le monophénol aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le monophénol aromatique A22 peut également comprendre un mélange d'une molécule libre de monophénol aromatique et d'une résine pré-condensée à base de monophénol aromatique, telle que décrite précédemment. En particulier, le monophénol aromatique A22 peut également comprendre un mélange de phénol et d'une résine pré-condensée à base de phénol.

### Mélange de polyphénol aromatique A21 et de monophénol aromatique A22

Le phénol A2 peut également comprendre un mélange d'un polyphénol aromatique A21 et d'un monophénol aromatique A22, tel que décrit précédemment.

De préférence, le phénol A2 comprend un mélange de polyphénol aromatique et d'une résine pré-condensée à base de polyphénol aromatique.

### Procédé de mélangeage de la première et de la deuxième phase

On définit N1 comme le nombre de sites réactifs du composé aromatique comme suit : une fonction aldéhyde représente deux sites réactifs et une fonction hydroxyméthyle représente un site réactif. Ainsi, par exemple, le 5-(hydroxyméthyl)-furfural a N1=3 sites réactifs et le 2,5-di(hydroxyméthyle)furane a N1=2 sites réactifs.

Dans le cas d'un polyphénol aromatique, on définit N2 comme le nombre de sites réactifs du polyphénol aromatique comme suit : chaque carbone libre du noyau aromatique adjacent à une fonction hydroxyle portée par le noyau aromatique représente un site réactif, chaque carbone libre ne pouvant être compté en tant que site réactif que pour une seule fonction hydroxyle adjacente. Ainsi, par exemple, le résorcinol et le phloroglucinol ont chacun N2=3 sites réactifs et le 2,2',4,4'-tétrahydroxydiphényl sulfide a N2=4 sites réactifs.

Dans le cas d'un monophénol aromatique, on définit N'2 comme le nombre de sites réactifs du monophénol aromatique comme suit : chaque carbone libre du noyau aromatique à six chainons adjacent à la fonction hydroxyle portée par le noyau aromatique représente un site réactif et le carbone libre du noyau aromatique à six chainons positionné en para de la fonction hydroxyle représente un site réactif. Ainsi, par exemple, le phénol a N'2=3 sites réactifs.

La composition adhésive aqueuse obtenue par le procédé conforme à l'invention peut bien entendu comporter tout ou partie des additifs habituels pour compositions adhésives aqueuses telles que ceux utilisés dans les colles RFL conventionnelles ; on citera par exemple des colorants, charges telles que noir de carbone ou silice, antioxydants ou autre stabilisants, et des épaississants, par exemple la carboxyméthylecellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Typiquement, lors d'une première étape de résinification, on mélange, avantageusement dans l'eau, les constituants de la résine thermodurcissable elle-même.

Cette première étape de résinification peut être réalisée selon plusieurs modes de réalisations.

Dans un premier mode de réalisation, on utilise une résine pré-condensée à base de polyphénol aromatique A21 telle que défini précédemment, c'est-à-dire issue à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

La résine pré-condensée à base de polyphénol aromatique A21 est avantageusement préparée en mélangeant progressivement le polyphénol aromatique et le composé comprenant au moins une fonction aldéhyde et/ou le composé comprenant au moins deux fonctions hydroxyméthyle portées par un noyau aromatique, par exemple le formaldéhyde, dans des quantités molaires telles que décrites précédemment.

L'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement. Puis, dans ce premier mode de réalisation, la composition adhésive peut être obtenue par mélangeage de cette résine pré-condensée (composé A2), et du composé A1 dans l'eau.

L'homme du métier saura ajuster les quantités molaires de résine pré-condensée à base de polyphénol aromatique A21 et du composé A1 afin d'obtenir une réticulation et une concentration adaptées à l'usage recherché, notamment en fonction de la nature de la résine pré-condensée à base de polyphénol aromatique A21.

Dans un deuxième mode de réalisation, on utilise une résine pré-condensée telle que décrite précédemment, c'est-à-dire à base :
- d'au moins un composé A1, le composé A1 étant choisi parmi :
   - un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
   - un composé A12 comprenant au moins un noyau aromatique porteur d'au moins une fonction aldéhyde ou
   - un mélange d'un composé A11 et d'un composé A12 ; et
- d'au moins un polyphénol aromatique A21 comprenant au moins un noyau aromatique porteur d'au moins deux fonctions hydroxyle en position méta l'une par rapport à l'autre, les deux positions ortho d'au moins une des fonctions hydroxyle étant non substituées, par exemple le phloroglucinol.

Dans ce deuxième mode de réalisation, la résine pré-condensée à base de polyphénol aromatique A21 est préparée dans des conditions analogues à la résine pré-condensée à base de polyphénol aromatique du premier mode de réalisation. Puis, on mélange progressivement cette résine pré-condensée à base de polyphénol aromatique A21 et le composé A1 dans des conditions analogues à celles du premier mode de réalisation. Là encore, l'homme du métier saura ajuster les quantités molaires de résine pré-condensée à base de polyphénol aromatique A21 et du composé A1 afin d'obtenir une réticulation et une concentration adaptées à l'usage recherché, notamment en fonction de la nature de la résine pré-condensée à base de polyphénol aromatique A21.

Dans un troisième mode de réalisation, on utilise un polyphénol aromatique A21 sous forme d'une molécule simple, par exemple du phloroglucinol.

Dans une première variante, la résine est obtenue par mélangeage dans l'eau du polyphénol aromatique A21 sous forme d'une molécule simple puis ajout du composé A1.

Dans une deuxième variante, la résine est obtenue par mélangeage du composé A1 dans l'eau et puis ajout du polyphénol aromatique A21 sous forme d'une molécule simple.

On mélange une quantité molaire n2 de polyphénol aromatique A21 et une quantité molaire n1 du composé A1 telles que 0,3≤(n2*N2)/(n1*N1)≤3 et de préférence 1<(n2*N2)/(n1*N1)≤2.

Dans chacun des trois modes de réalisation précédents, on pourrait remplacer le polyphénol aromatique, en totalité ou en partie, par un monophénol aromatique comprenant au moins un noyau aromatique à six chainons portant une unique fonction hydroxyle, les deux positions ortho de la fonction hydroxyle étant non substituées, ou au moins une position ortho et la position para de la fonction hydroxyle étant non substituées.

Dans ce cas, dans le troisième mode de réalisation décrit ci-dessus dans lequel on utilise des composés sous forme de molécules simples, on mélangerait alors une quantité molaire n2 de polyphénol aromatique A21 et/ou une quantité molaire n'2 de monophénol aromatique A22 et une quantité molaire n1 du composé A1 telle que 0,3≤[(n2*N2)+ (n'2*N'2)]/(n1*N1)≤3 et de préférence 1<[(n2*N2)+ (n'2*N'2)]/(n1*N1)≤2.

Dans l'un quelconque de ces trois modes de réalisation, la résine partiellement réticulée est généralement diluée dans l'eau pour former la deuxième phase, avant d'être ajoutée à la première phase comprenant le latex ou aux latex (s'ils sont plusieurs) d'élastomère(s) insaturé(s) et le ou les sels de phosphate pour constituer la composition adhésive aqueuse de l'invention, selon un mode opératoire général qui est bien connu de l'homme du métier dans le domaine des colles RFL.

Par exemple, les constituants de la composition adhésive sont ajoutés dans l'ordre suivant : l'eau, la première phase, la deuxième phase comprenant la résine partiellement réticulée (diluée) et d'éventuels additifs solubles dans l'eau. L'ensemble est mélangé sous agitation pendant 1 à 30 min, par exemple à 20°C.

Lors d'une dernière étape de fabrication, dite de maturation, la composition adhésive aqueuse est généralement stockée à température ambiante (23°C) pendant un temps de maturation pouvant varier typiquement de 1 à plusieurs heures voire plusieurs jours, avant son utilisation finale.

Avantageusement, on prépare la composition adhésive aqueuse en mélangeant la première phase et la deuxième phase de sorte que le taux d'extrait sec de la composition adhésive aqueuse va de 5% à 60 % et de préférence de 10 à 30 %.

Avantageusement, on prépare la composition adhésive aqueuse en mélangeant la première phase et la deuxième phase de sorte que le taux d'extrait sec de la première phase dans la composition adhésive aqueuse va de 4,0 à 30,0 %, de préférence de 12,0 à 25,0 % et plus préférentiellement de 14,0 à 22,0 %.

Avantageusement, on prépare la composition adhésive aqueuse en mélangeant la première phase et la deuxième phase de sorte que le taux d'extrait sec de la deuxième phase dans la composition adhésive aqueuse va de 1,0 à 30,0 %, de préférence de 1,5 à 20,0 %, plus préférentiellement 1,5 à 7,0 % et encore plus préférentiellement de 2,0 à 5,0 %.

De préférence, on prépare la composition adhésive aqueuse en mélangeant la première phase et la deuxième phase de sorte que le pH de la composition adhésive aqueuse va de 9,0 à 12,0 et de préférence de 10,0 à 11,5 de façon à limiter l'éventuelle précipitation du ou de certains latex d'élastomère(s) insaturé(s).

Ce pH est mesuré dans des conditions standards, à savoir 23°C +/- 2°C à pression atmosphérique selon la Norme AFNOR NF T 90-008 : Qualité de l'eau - Détermination du pH. On plonge une électrode du type Mettler-Toledo type INLAB 413 dans la solution puis on relève la valeur affiché au bout de 2 minutes.

Dans le mode de réalisation décrit ci-avant dans lequel le sel de phosphate S1 est le phosphate de sodium, on prépare la composition adhésive aqueuse en mélangeant la première phase et la deuxième phase de sorte que le taux d'extrait sec de phosphate de sodium S1 dans la composition adhésive aqueuse soit inférieur ou égal à 2,50%, de préférence inférieur ou égal à 2,00%, plus préférentiellement inférieur ou égal à 1,50% et encore plus préférentiellement inférieur ou égal à 1,30%. On prépare également la composition adhésive aqueuse en mélangeant la première phase et la deuxième phase de sorte que le taux d'extrait sec de phosphate de sodium S1 dans la composition adhésive aqueuse soit supérieur ou égal à 0,30%, de préférence supérieur ou égal à 0,40% et plus préférentiellement supérieur ou égal à 0,60%.

Dans le mode de réalisation décrit ci-avant dans lequel le sel de phosphate S1 est le phosphate de potassium, on prépare la composition adhésive aqueuse en mélangeant la première phase et la deuxième phase de sorte que le taux d'extrait sec de phosphate de potassium S1 dans la composition adhésive aqueuse soit inférieur ou égal à 3,30%, de préférence inférieur ou égal à 2,70%, plus préférentiellement inférieur ou égal à 2,20% et encore plus préférentiellement inférieur ou égal à 1,70%. On prépare également la composition adhésive aqueuse en mélangeant la première phase et la deuxième phase de sorte que le taux d'extrait sec de phosphate de potassium S1 dans la composition adhésive aqueuse soit supérieur ou égal à 0,40%, de préférence supérieur ou égal à 0,50% et plus préférentiellement supérieur ou égal à 0,80%.

Dans le mode de réalisation décrit ci-avant dans lequel le sel de phosphate S2 est le phosphate de sodium, on prépare la composition adhésive aqueuse en mélangeant la première phase et la deuxième phase de sorte que le taux d'extrait sec de phosphate de sodium S2 dans la composition adhésive aqueuse soit inférieur ou égal à 2,50%, de préférence inférieur ou égal à 2,00%, plus préférentiellement inférieur ou égal à 1,50% et encore plus préférentiellement inférieur ou égal à 1,00%. On prépare également la composition adhésive aqueuse en mélangeant la première phase et la deuxième phase de sorte que le taux d'extrait sec de phosphate de sodium S2 dans la composition adhésive aqueuse soit supérieur ou égal à 0,40%, de préférence supérieur ou égal à 0,60% et plus préférentiellement supérieur ou égal à 0,80%.

Dans le mode de réalisation décrit ci-avant dans lequel le sel de phosphate S2 est le phosphate de potassium, on prépare la composition adhésive aqueuse en mélangeant la première phase et la deuxième phase de sorte que le taux d'extrait sec de phosphate de potassium S2 dans la composition adhésive aqueuse soit inférieur ou égal à 3,00%, de préférence inférieur ou égal à 2,50%, plus préférentiellement inférieur ou égal à 2,00% et encore plus préférentiellement inférieur ou égal à 1,50%. On prépare également la composition adhésive aqueuse en mélangeant la première phase et la deuxième phase de sorte que le taux d'extrait sec de phosphate de potassium S2 dans la composition adhésive aqueuse soit supérieur ou égal à 0,50%, de préférence supérieur ou égal à 0,80% et plus préférentiellement supérieur ou égal à 1,10%.

Dans le mode de réalisation décrit ci-avant dans lequel les sels de phosphate S1 et S2 sont le phosphate de sodium, on prépare la composition adhésive aqueuse en mélangeant la première phase et la deuxième phase de sorte que le taux d'extrait sec des phosphates de sodium S1 + S2 dans la composition adhésive aqueuse soit inférieur ou égal à 5,00%, de préférence inférieur ou égal à 4,00%, plus préférentiellement inférieur ou égal à 3,00% et encore plus préférentiellement inférieur ou égal à 2,30%. On prépare également la composition adhésive aqueuse en mélangeant la première phase et la deuxième phase de sorte que le taux d'extrait sec des phosphates de sodium S1 + S2 dans la composition adhésive aqueuse soit supérieur ou égal à 0,70%, de préférence supérieur ou égal à 1,00% et plus préférentiellement supérieur ou égal à 1,40%.

Dans le mode de réalisation où la base est l'hydroxyde de sodium, on prépare la composition adhésive aqueuse en mélangeant la première phase et la deuxième phase de sorte que le taux d'extrait sec d'hydroxyde de sodium dans la composition adhésive aqueuse soit inférieur ou égal à 1,50%, de préférence inférieur ou égal à 1,00%, plus préférentiellement inférieur ou égal à 0,80% et encore plus préférentiellement inférieur ou égal à 0,60%. On prépare également la composition adhésive aqueuse en mélangeant la première phase et la deuxième phase de sorte que le taux d'extrait sec d'hydroxyde de sodium dans la composition adhésive aqueuse soit supérieur ou égal à 0,02%, de préférence supérieur ou égal à 0,05% et plus préférentiellement supérieur ou égal à 0,10%.

### COMPOSITION ADHESIVE AQUEUSE OBTENUE PAR LE PROCEDE SELON L'INVENTION

L'invention concerne également une composition adhésive aqueuse obtenue par le procédé selon l'invention.

Avantageusement, la composition adhésive aqueuse forme une suspension colloïdale aqueuse.

Par suspension colloïdale aqueuse on entend une suspension d'un ou plusieurs latex dans l'eau, cette suspension n'étant ni démixée ni gélifiée après 24 heures à 23°C sous pression atmosphérique sans agitation et dans un récipient hermétique, après le mélangeage du ou des latex et de la résine.

Par gélifiée, on entend que la suspension liquide s'est transformée en une masse solide élastique.

Par démixée, on entend que le ou les latex et la résine forment au moins deux phases distinctes.

### ELEMENT DE RENFORT SELON L'INVENTION

L'invention concerne également un élément de renfort tel que défini précédemment.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en œuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

### COMPOSITE SELON L'INVENTION

L'invention concerne également un composite d'élastomère renforcé d'au moins un élément de renfort tel que défini précédemment noyé dans la matrice d'élastomère.

Ce composite d'élastomère peut être préparé selon un procédé comportant au moins les étapes suivantes :
- au cours d'une première étape, combiner au moins un élément de renfort avec une composition d'élastomère pour former un composite d'élastomère renforcé de l'élément de renfort;
- puis, au cours d'une deuxième étape, réticuler par cuisson, par exemple par vulcanisation, de préférence sous pression, le composite ainsi formé.

De préférence, la composition d'élastomère comprend un élastomère diénique. Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les compositions d'élastomère peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Dans un premier mode de réalisation préférentiellement destiné à une utilisation pneumatique, la composition d'élastomère comprend un élastomère diénique choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères.

De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Dans un deuxième mode de réalisation préférentiellement destiné à une utilisation courroie, la composition d'élastomère comprend un élastomère choisi dans le groupe constitué par un élastomère de type éthylène alpha oléfine, un élastomère polychloroprène et les mélanges de ces élastomères, un ou plusieurs autres élastomères. La composition d'élastomère peut également comprendre un ou plusieurs autres composants.

Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

De préférence, la composition d'élastomère comprend une charge renforçante.

Lorsqu'une charge renforçante est utilisée, on peut utiliser tout type de charge renforçante connue pour ses capacités à renforcer une composition d'élastomère utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition d'élastomère, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition d'élastomère comprend des additifs divers.

Les compositions d'élastomères peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition d'élastomère comprend un système de réticulation, plus préférentiellement de vulcanisation.

Dans le premier mode de réalisation préférentiellement destiné à une utilisation pneumatique, la composition d'élastomère comprend un système de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Avantageusement, le composite est tel que la matrice d'élastomère est à base d'une composition d'élastomère comprenant un système de réticulation comprenant un taux de soufre moléculaire allant de 1 à 5 pce. Par soufre moléculaire, on entend du soufre issu d'un composé Sn avec n>2. En effet, les inventeurs émettent l'hypothèse qu'il existe une compétition entre l'adhésion par la composition adhésive et l'adhésion par les dendrites de sulfure de cuivre et de zinc. Or cette compétition a tendance à réduire le niveau général de l'adhésion. Plus on diminue le taux de soufre présent dans la matrice d'élastomère, plus on diminue cette compétition, plus on favorise le niveau d'adhésion par la seule composition adhésive.

Très avantageusement, le taux de soufre moléculaire du système de réticulation de la composition d'élastomère est inférieur ou égal à 4 pce, de préférence à 3 pce et plus préférentiellement à 2,5 pce. En plus de réduire encore davantage la compétition entre l'adhésion par la composition adhésive et l'adhésion par les dendrites de sulfure de cuivre et de zinc, on améliore la durée de stockage de la composition d'élastomère à température ambiante en évitant les risques de pré-vulcanisation qui surviendraient si on utilisait un taux de soufre plus élevé.

Très avantageusement, le taux de soufre moléculaire du système de réticulation de la composition d'élastomère est supérieur ou égal à 1,5 pce, de préférence à 2 pce.

Le taux de soufre est mesuré par analyse élémentaire, à l'aide du micro-analyseur Thermo Scientific Flash 2000. L'analyse comprend une étape de combustion de l'échantillon puis une étape de séparation des composés formés. Environ 1 mg d'échantillon est introduit dans le micro-analyseur, où il subit une combustion flash de 1000°C sous oxygène. Les gaz formés sont alors oxydés grâce à l'oxygène en excès et à un catalyseur d'anhydride tungstique. Une étape de réduction par passage sur du cuivre permet ensuite de piéger l'oxygène en excès, et de réduire les oxydes d'azote en N2 ainsi que les sulfites en dioxyde de soufre SO2. L'eau est piégée et les composés N2, CO2, SO2 formés sont ensuite séparés sur une colonne chromatographique puis détectés par un catharomètre. La quantification du soufre total est réalisée par mesure de l'aire du pic de SO2, après calibration avec des standards.

L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans le deuxième mode de réalisation préférentiellement destiné à une utilisation courroie, le système de réticulation est sensiblement dépourvu de souffre, et comprend avantageusement un peroxyde, de préférence un peroxyde organique. Avantageusement, le taux de peroxyde va de 0,5 à 8 pce. Avantageusement, le système de réticulation comprend un agent de co-réticulation, de préférence du soufre ou du triallylcyanurate. Avantageusement, le taux de l'agent de co-réticulation va de 0,5 à 5 pce.

### PNEUMATIQUE SELON L'INVENTION

L'invention concerne également un pneumatique. Le composite d'élastomère de l'invention est avantageusement utilisable pour le renforcement de pneumatiques de tous types de véhicules, en particulier véhicules tourisme ou véhicules industriels tels que Poids-lourd.

### COURROIE SELON L'INVENTION

L'invention concerne également une courroie. Par exemple, une telle courroie peut être une courroie de transmission de puissance.

L'invention sera mieux comprise à la lecture de la description qui va suivre, donnée uniquement à titre d'exemple non limitatif et faite en se référant aux dessins dans lesquels:
- la figure 1 est un schéma d'un pneumatique selon l'invention;
- la figure 2 est un schéma d'une courroie selon l'invention.

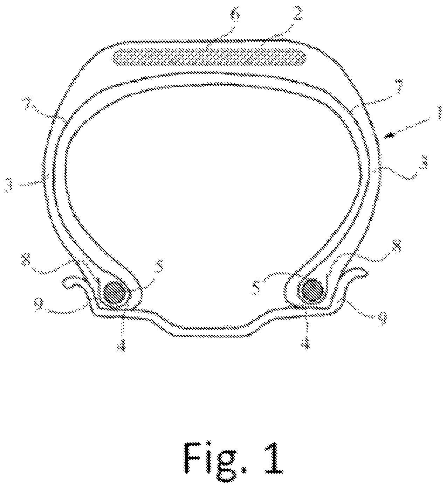

La figure 1 annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet 6 comporte un élément conducteur, ici un élément filaire conducteur revêtu ou un composite d'élastomère selon l'invention. Selon un autre exemple de mode de réalisation possible de l'invention, ce sont par exemple les tringles qui pourraient être constituées, en tout ou partie, d'un élément conducteur, ici un élément filaire conducteur revêtu.

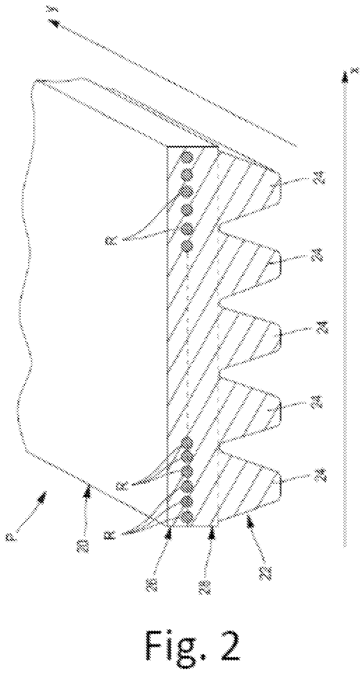

On a représenté sur la figure 2 une courroie de transmission de puissance P. La courroie de transmission de puissance P est destinée à l'entrainement en rotation d'un organe quelconque. La courroie de transmission de puissance P comprend un corps élastomérique 20 réalisé dans une matrice élastomérique et dans lequel sont noyés des éléments de renfort conducteurs, ici métalliques, revêtus R. La courroie de transmission de puissance P comprend également une couche 22 d'entrainement mécanique agencée au contact du corps élastomérique 20. La couche d'entrainement mécanique 22 est pourvue de plusieurs nervures 24 s'étendant chacune selon une direction générale Y sensiblement perpendiculaire à une direction longitudinale X de la courroie P. Chaque nervure 24 présente une forme trapézoïdale en section transversale. Les directions générales des nervures 24 sont sensiblement parallèles entre elles. Les nervures 24 s'étendent sur toute la longueur de la courroie P. Ces nervures 24 sont destinées à être engagées dans des gorges ou des rainures de forme complémentaire, par exemple portées par des poulies sur lesquelles la courroie est destinée à être montée.

Le corps élastomérique 20 est formé d'une part par une première couche élastomérique 26 réalisée dans une première matrice élastomérique et d'autre part par une deuxième couche élastomérique 28 réalisée dans une deuxième matrice élastomérique. La couche d'entrainement mécanique 22 est formée par une troisième couche réalisée dans une troisième matrice élastomérique.

Chaque première et deuxième matrice élastomérique est à base respectivement d'une première et deuxième composition d'élastomère chacune comprenant une charge renforçante, ici du noir de carbone (10 à 100 pce), un sel métallique d'acide organique a, β insaturé, ici du monométhacrylate de zinc (2 à 50 pce), un agent de dispersion de la charge renforçante (1 à 10 pce), un antioxydant (0,5 à 8 pce), un peroxyde organique (0,5 à 8 pce), un co-agent de réticulation (0,5 à 5 pce en poids) et un plastifiant (1 à 20 pce en poids).

Au moins l'une des première et deuxième compositions d'élastomère, et donc le corps élastomérique 20, comprend également au moins un élastomère choisi dans le groupe constitué par un élastomère de type éthylène alpha oléfine, un élastomère polychloroprène (CR) et les mélanges de ces élastomères. En l'espèce, chaque première et deuxième composition d'élastomère comprend un mélange de caoutchouc naturel (NR) et d'un copolymère d'éthylène-propylène-diène (EPDM), la proportion de caoutchouc naturel étant inférieur à 30 pce.

La troisième matrice élastomérique à base d'une troisième composition d'élastomère comprenant au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères. En l'espèce, l'élastomère de la composition d'élastomère de la troisième matrice élastomérique est choisi dans le groupe constitué par un élastomère de type éthylène alpha oléfine, un élastomère polychloroprène (CR), un polybutadiène (BR), un caoutchouc naturel (NR), un copolymère de butadiène-styrène (SBR) et les mélanges de ces élastomères. Ici, l'élastomère de la composition d'élastomère de la troisième matrice élastomérique est un élastomère de type éthylène alpha oléfine, par exemple un copolymère d'éthylène-propylène (EPM), un copolymère d'éthylène-propylène-diène (EPDM) ou un mélange de ces copolymères.

La courroie P selon l'invention a par exemple pour caractéristique essentielle qu'elle comporte plusieurs éléments conducteurs, ici des éléments filaires métalliques, revêtus R et un composite d'élastomère selon l'invention 20.

Bien entendu, l'invention concerne les objets précédemment décrits, à savoir le composite d'élastomère tel que le pneumatique ou la courroie le comportant, tant à l'état cru (avant réticulation) qu'à l'état cuit (après réticulation).

### TESTS COMPARATIFS

On a effectué des tests de stabilité et des tests d'adhésion sur différentes compositions adhésives aqueuses témoins et des compositions adhésives aqueuses selon l'invention.

### Préparation des compositions adhésives aqueuses témoins E0, E1, E3

La composition E0 comprend une première phase comprenant des latex d'élastomères insaturés et de l'ammoniaque d'une part ajouté pour stabiliser le caoutchouc naturel et d'autre part ajouté pour stabiliser la première phase. La composition E0 comprend aussi une deuxième phase comprenant de l'hydroxyde de sodium et une résine à base d'une résine précondensée et de formaldéhyde.

Pour préparer 100 g de première phase de la composition E0, on mélange 30,7 g de latex de caoutchouc naturel concentré à 30%, 11,23g de latex de butadiène-styrène (SBR) concentré à 41%, 22,7 g de latex de vinylpyridine-styrène-butadiène (VP) concentré à 41%, 3,98 g d'ammoniaque concentré à 21% et 31,3 g d'eau.

Pour préparer 100 g de deuxième phase, on mélange 8,44 g de résine, 2,51 g d'hydroxyde de sodium concentré à 30% et 89,05 g d'eau.

On mélange ensuite 69,7 g de première phase et 30,3 g de deuxième phase de façon à obtenir 100 g de la composition adhésive aqueuse E0.

Les compositions E1 et E3 comprennent des résines différentes de celles de la composition E0, les autres constituants de la composition étant identiques. En l'espèce, la résine de la composition E1 est à base de phloroglucinol et de 1,4-benzènedicarboxaldéhyde et la résine de la composition E3 est à base de de phloroglucinol et de 5-(hydroxyméthyl)-furfural.

### Préparation de la composition adhésive aqueuse témoin EO'

A la différence de la composition E0, la première phase de la composition E0' comprend uniquement l'ammoniaque ajouté pour stabiliser le caoutchouc naturel et un sel de phosphate ajouté à la première phase.

Pour préparer 100 g de première phase de la composition E0', on mélange 30,7 g de latex de caoutchouc naturel concentré à 30%, 11,3 g de latex de butadiène-styrène (SBR) concentré à 41%, 22,7 g de latex de vinylpyridine-styrène-butadiène (VP) concentré à 41%, 0,94 g de phosphate de sodium et 33,9 g d'eau.

La deuxième phase et la composition E0' sont ensuite préparées *mutatis mutandis* par rapport à la composition E0.

### Préparation de la composition adhésive aqueuse témoin E2

A la différence de la composition E1, la composition E2 comprend un sel de phosphate ajouté à la deuxième phase.

Pour préparer 100 g de première phase de la composition E2, on mélange 30,7 g de latex de caoutchouc naturel concentré à 30%, 11,3g de latex de butadiène-styrène (SBR) concentré à 41%, 22,7 g de latex de vinylpyridine-styrène-butadiène (VP) concentré à 41%, 3,98 g d'ammoniaque concentré à 21% et 31,3 g d'eau.

Pour préparer 100 g de deuxième phase, on mélange 8,44 g de résine, 3,12 g de phosphate de sodium et 88,44 g d'eau.

On mélange ensuite 69,5 g de première phase et 30,5 g de deuxième phase de façon à obtenir 100 g de la composition adhésive aqueuse E2.

### Préparation de la composition adhésive aqueuse selon l'invention E1'

La composition E1' obtenue par le procédé selon l'invention comprend une première phase comprenant des latex d'élastomères insaturés et de l'ammoniaque ajouté pour stabiliser le caoutchouc naturel mais pas d'ammoniaque ajouté pour stabiliser la première phase. En remplacement de cet ammoniaque, la première phase de la composition E1' comprend conformément à l'invention du phosphate de sodium. La composition E1' comprend aussi une deuxième phase comprenant de l'hydroxyde de sodium et une résine à base de phloroglucinol et de 1,4-benzènedicarboxaldéhyde.

Pour préparer 100g de première phase, on mélange 30,7 g de latex de caoutchouc naturel concentré à 30%, 11,3 g de latex de butadiène-styrène (SBR) concentré à 41%, 22,7 g de latex de vinylpyridine-styrène-butadiène (VP) concentré à 41%, 0,94 g de phosphate de sodium S1 et 33,9 g d'eau.

Pour préparer 100g de deuxième phase, on mélange 8,44 g de résine, 2,51 g d'hydroxyde de sodium concentré à 30% et 89,05 g d'eau.

On mélange ensuite 69,5 g première phase et 30,5 g de deuxième phase de façon à obtenir la composition E1'.

On prépare la composition adhésive aqueuse E1' en mélangeant la première phase et la deuxième phase de sorte que l'ammoniaque soit à un taux massique inférieur strictement à 0,55% de la composition adhésive aqueuse. Ici le taux massique d'ammoniaque dans la composition E1' est de 0,05%.

Ici le taux d'extrait sec de phosphate de sodium S1 dans la première phase est de 0,94%.

Le taux d'extrait sec du ou des latex d'élastomère(s) dans la première phase est de 65%.

Le taux d'extrait sec du ou des latex d'élastomère(s) dans la composition E1' est de 16,2%.

Ici, le taux d'extrait sec d'hydroxyde de sodium dans la composition E1' est de 0,23%.

Ici le taux d'extrait sec de phosphate de sodium S1 dans la composition E1' est de 0,65%.

Le taux d'extrait sec de la première phase dans la composition E1' est de 16,9%.

Le taux d'extrait sec de la deuxième phase dans la composition E1' est de 2,8%.

Le pH de la composition E1' après 24 heures est de 10,2.

### Préparation de la composition adhésive aqueuse selon l'invention E2'

A la différence de la composition E1', la composition E2' comprend un sel de phosphate ajouté à la deuxième phase.

Pour préparer 100g de première phase, on mélange 30,7 g de latex de caoutchouc naturel concentré à 30%, 11,3 g de latex de butadiène-styrène (SBR) concentré à 41%, 22,7 g de latex de vinylpyridine-styrène-butadiène (VP) concentré à 41%, 0,94 g de phosphate de sodium S1 et 33,9 g d'eau.

Pour préparer 100g de deuxième phase, on mélange 8,44 g de résine, 3,12 g de phosphate de sodium S2 et 88,44 g d'eau.

On mélange ensuite 69,5 g première phase et 30,5 g de deuxième phase de façon à obtenir la composition E2'.

On prépare la composition adhésive aqueuse E2' en mélangeant la première phase et la deuxième phase de sorte que l'ammoniaque soit à un taux massique inférieur strictement à 0,55% de la composition adhésive aqueuse. Ici le taux massique d'ammoniaque dans la composition E2' est de 0,05%.

Le taux d'extrait sec de phosphate de sodium S1 dans la première phase est de 0,94%.

Le taux d'extrait sec du ou des latex d'élastomère(s) dans la première phase est de 65%.

Le taux d'extrait sec du ou des latex d'élastomère(s) dans la composition E2' est de 16,2%.

Le taux d'extrait sec de phosphate de sodium S2 dans la composition E2' est de 0,95%.

Le taux d'extrait sec de phosphate de sodium S1 dans la composition E2' est de 0,65%.

Le taux d'extrait sec de phosphate de potassium S1 + S2 dans la composition adhésive aqueuse E2' est de 1,6%.

Le taux d'extrait sec de la première phase dans la composition E2' est de 16,9%.

Le taux d'extrait sec de la deuxième phase dans la composition E2' est de 3,5%.

Le pH de la composition E2' après 24 heures est de 11,0.

### Préparation de la composition adhésive aqueuse selon l'invention E3'

A la différence de la composition E1', la composition E3' une résine différente de celles de la composition E1', les autres constituants de la composition étant identiques. En l'espèce, la résine de la composition E3' est à base de de phloroglucinol et de 5-(hydroxyméthyl)-furfural.

Pour préparer 100g de première phase, on mélange 30,7 g de latex de caoutchouc naturel concentré à 30%, 11,3 g de latex de butadiène-styrène (SBR) concentré à 41%, 22,7 g de latex de vinylpyridine-styrène-butadiène (VP) concentré à 41%, 0,94 g de phosphate de sodium S1 et 33,9 g d'eau.

Pour préparer 100g de deuxième phase, on mélange 8,44 g de résine, 2,51 g d'hydroxyde de sodium concentré à 30% et 89,05 g d'eau.

On mélange ensuite 69,5 g première phase et 30,5 g de deuxième phase de façon à obtenir la composition E3'.

On prépare la composition adhésive aqueuse E3' en mélangeant la première phase et la deuxième phase de sorte que l'ammoniaque soit à un taux massique inférieur strictement à 0,55% de la composition adhésive aqueuse. Ici le taux massique d'ammoniaque dans la composition E3' est de 0,05%.

Le taux d'extrait sec de phosphate de sodium S1 dans la première phase est de 0,94%.

Le taux d'extrait sec du ou des latex d'élastomère(s) dans la première phase est de 65%.

Le taux d'extrait sec du ou des latex d'élastomère(s) dans la composition E3' est de 16,2%.

Le taux d'extrait sec d'hydroxyde de sodium dans la composition E3' est de 0,23%.

Le taux d'extrait sec de phosphate de sodium S1 dans la composition E3' est de 0,65%.

Le taux d'extrait sec de la première phase dans la composition E3' est de 16,9%.

Le taux d'extrait sec de la deuxième phase dans la composition E3' est de 12,3 %.

### Préparation des compositions adhésives aqueuses témoins E1", E2" et E3"

A la différence des compositions E1', E2' et E3', la première phase de la composition E1", E2" et E3"comprend uniquement l'ammoniaque ajouté pour stabiliser le caoutchouc naturel et de l'hydroxyde de sodium ajouté à la première phase.

Pour préparer 100 g de première phase des compositions E1", E2" et E3", on mélange 30,7 g de latex de caoutchouc naturel concentré à 30%, 11,3 g de latex de butadiène-styrène (SBR) concentré à 41%, 22,7 g de latex de vinylpyridine-styrène-butadiène (VP) concentré à 41%, 1,2 g d'hydroxyde de sodium et 31,3 g d'eau.

La deuxième phase des compositions E1", E2" et E3" et les compositions E1", E2" et E3" sont ensuite préparées *mutatis mutandis* par rapport respectivement aux compositions E1', E2' et E3'.

Les compositions adhésives des différents composites décrits ci-dessus sont rassemblées dans le tableau 1 ci-dessous en extrait sec pour 100g de composition.

**Tableau 1**

| **Compositions adhésives** | **E0** | **E0'** | **E1** | **E1'** | **E1"** | **E2** | **E2'** | **E2"** | **E3** | **E3'** | **E3"** |
|---|---|---|---|---|---|---|---|---|---|---|---|
| **1^{ère} Phase** | | | | | | | | | | | |
| **Latex d'élastomères** | | | | | | | | | | | |
| NR (1) | 6,43 | 6,43 | 6,43 | 6,43 | 6,43 | 6,43 | 6,43 | 6,43 | 6,43 | 6,43 | 6,43 |
| SBR (2) | 3,24 | 3,24 | 3,24 | 3,24 | 3,24 | 3,24 | 3,24 | 3,24 | 3,24 | 3,24 | 3,24 |
| VP-SBR (3) | 6,48 | 6,48 | 6,48 | 6,48 | 6,48 | 6,48 | 6,48 | 6,48 | 6,48 | 6,48 | 6,48 |
| **Ammoniaque (4)** | 0,55 | 0,05 | 0,55 | 0,05 | 0,05 | 0,55 | 0,05 | 0,05 | 0,55 | 0,05 | 0,05 |
| **Phosphate de sodium (5) S1** | - | 0,65 | - | 0,65 | - | - | 0,65 | - | - | 0,65 | - |
| **Hydroxyde de sodium (11)** | - | - | - | - | 0,23 | - | - | 0,23 | - | - | 0,23 |

| **2^{ème} Phase** | | | | | | | | | | | |
|---|---|---|---|---|---|---|---|---|---|---|---|
| **Composé A1** | | | | | | | | | | | |
| 1,4-benzènedicarboxaldéhyde (6) | - | - | 0,89 | 0,89 | 0,89 | 0,71 | 0,71 | 0,71 | - | - | - |
| 5-(hydroxyméthyl)-furfural (7) | - | - | - | - | - | - | - | - | 1,33 | 1,33 | 1,33 |

| **Aldéhyde** | | | | | | | | | | | |
|---|---|---|---|---|---|---|---|---|---|---|---|
| Formaldéhyde (8) | 0,70 | 0,70 | - | - | - | - | - | - | - | - | - |

| **Composé A2** | | | | | | | | | | | |
|---|---|---|---|---|---|---|---|---|---|---|---|
| Phloroglucinol (9) | - | - | 1,67 | 1,67 | 1,67 | 1,33 | 1,33 | 1,33 | 1,33 | 1,33 | 1,33 |
| SRF 1524 (10) | 2,04 | 2,04 | - | - | - | - | - | - | - | - | - |
| **Hydroxyde de sodium (11)** | 0,05 | 0,05 | 0,23 | 0,23 | 0,23 | - | - | - | 0,23 | 0,23 | 0,23 |
| **Phosphate de sodium (5) S2** | - | - | - | - | - | 0,95 | 0,95 | 0,95 | - | - | - |
| Poids total d'extrait sec de composition adhésive | 19,50 | 19,65 | 19,50 | 19,65 | 19,20 | 19,70 | 19,80 | 19,40 | 19,60 | 19,70 | 19,30 |
| Poids d'eau | 80,50 | 80,35 | 80 ,50 | 80 ,35 | 80 ,80 | 80,30 | 80,20 | 80 ,60 | 80,40 | 80,30 | 80,70 |

| **Test de stabilité après 24h** | | | | | | | | | | | |
|---|---|---|---|---|---|---|---|---|---|---|---|
| Suspension colloïdale aqueuse | + | - | + | + | + | + | + | + | + | + | + |

| | | | | | | | | | | | |
|---|---|---|---|---|---|---|---|---|---|---|---|
| (1) Latex NR (« Trang Latex » de la société Bee tex ; dilué à 30% en poids) ; (2) Latex SBR (« Encord-201 » de la société Jubilant ; dilué à 41% en poids) ; (3) Latex Vinylpyridine-styrène-butadiène («VP 106S» de Eliokem ; dilué à 41%) ; (4) Ammoniaque (de la société Aldrich ; diluée à 21%) ; (5) Na₃PO₄ Phosphate de sodium (de la société Aldrich ; de pureté 99%) ; (6) 1,4-benzènedicarboxaldéhyde (de la société ABCR ; de pureté 98%) ; (7) 5-(hydroxyméthyl)-furfural (de la société Aldrich ; de pureté 99%) (8) Formaldéhyde (de la société Caldic ; dilué à 36%) (9) Phloroglucinol (de la société Alfa Aesar ; de pureté 99%) ; (10) Résine précondensée SRF 1524 (de la société Schenectady ; dilué à 75%) (11) Hydroxyde de sodium (de la société Aldrich ; dilué à 30%). | | | | | | | | | | | |

### Test de stabilité de la composition adhésive aqueuse

On a testé différentes compositions témoins E0, E0', E1, E1", E2, E2", E3, E3" et des compositions E1', E2' et E3' selon l'invention.

On caractérise la stabilité de ces compositions en constatant que, après 24 heures à 23°C sous pression atmosphérique sans agitation et dans un récipient hermétique, après le mélangeage du ou des latex et de la résine, la composition est une suspension colloïdale aqueuse qui n'est ni démixée, ni gélifiée.

### Les résultats sont rassemblés dans le tableau 1 ci-dessus.

On constate que la composition E0' comprenant du phosphate de sodium dans la première phase, de l'hydroxyde de sodium dans la deuxième phase et une résine à base d'une résine précondensée et de formaldéhyde n'est pas utilisable en tant que composition adhésive aqueuse. On constate une démixtion et une gélification.

Les inventeurs émettent l'hypothèse qu'avec le sel de phosphate joue le rôle de catalyseur sur le formaldéhyde qui est déjà un composé relativement réactif. On constate un effet de démixtion et de gélification qui rend la composition inutilisable.

Les compositions témoins E0, E1, E1", E2, E2", E3 et E3" sont des suspensions colloïdales aqueuses qui ne sont ni démixées, ni gélifiées.

Les compositions E1', E2' et E3' selon l'invention sont des suspensions colloïdales aqueuses qui ne sont ni démixées, ni gélifiées.

Une des caractéristiques essentielle de l'invention réside donc bien dans le choix de la résine à base d'au moins un composé A1, le composé A1 étant choisi parmi :
- un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
- un composé A12 comprenant au moins un noyau aromatique porteur d'au moins une fonction aldéhyde ou
- un mélange d'un composé A11 et d'un composé A12.

### Test d'adhésion

On a testé différents éléments de renfort textiles revêtus témoins T0, T0', T1, T1", T2, T2", T3, T3" et des éléments de renfort textiles revêtus T1', T2' et T3' selon l'invention au moyen d'un test visant à mesurer la force d'arrachage de ces éléments de renforts textiles revêtus et noyés dans une matrice élastomérique.

Les éléments de renfort en polyamide (polyamide-6,6 ou nylon-6,6) consistent en des retors à deux brins de construction 140x2 (titre de chaque brin égal à 140 tex) et 250/250 (torsion en t/m) ; ils ont été revêtus avec chacune de ces 10 compositions adhésives aqueuses E0, E1, E1', E1", E2, E2', E2", E3, E3' et E3", puis séchés dans un four de séchage à 180°C pendant 60s. Puis la composition adhésive a été réticulée par passage des éléments de renfort textiles dans un four de traitement à 230°C pendant 60 s. Puis l'ensemble a été solidarisé par cuisson à une composition de caoutchouc naturel, grâce à un traitement thermique de vulcanisation, pour former des éprouvettes de composites comme décrit ci-après.

La qualité de la liaison entre la composition de caoutchouc et les éléments de renfort textiles est ensuite déterminée par un test dans lequel on mesure la force nécessaire pour extraire des tronçons d'éléments de renfort textiles, de la composition de caoutchouc vulcanisée. Cette composition de caoutchouc est une composition conventionnelle utilisable pour le calandrage de nappes d'armature de carcasse de pneumatique, ces nappes comprenant des éléments de renfort textiles noyée dans une matrice élastomérique à base de caoutchouc naturel, de noir de carbone et des additifs usuels.

Plus précisément, le vulcanisat est un bloc d'une composition élastomériqueconstitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les éléments de renfort textiles (15 tronçons au total) sont emprisonnés entre les deux plaques de la composition élastomérique à l'état cru, à égale distance et en laissant dépasser de part et d'autre de ces plaques une extrémité de câblé de longueur suffisante pour la traction ultérieure. Le bloc comportant les éléments de renfort textiles est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min.

A l'issue de la cuisson, l'éprouvette ainsi constituée du bloc vulcanisé et des 15 tronçons d'éléments de renfort textiles est mise en place dans les mâchoires d'une machine de traction adaptée pour permettre de tester chaque tronçon isolément, à une vitesse et une température données (par exemple, dans le cas présent, à 100 mm/min et 20°C).

On caractérise les niveaux d'adhésion en mesurant la force dite d'arrachage (notée Fₘₐₓ) pour arracher les éléments de renfort textiles de l'éprouvette. Pour la force d'arrachage (Fmax0), on a fixé une valeur d'adhésion à 100 pour chaque composition adhésive aqueuse (E0, E1, E2 et E3) à base d'ammoniaque d'une part ajouté pour stabiliser le caoutchouc naturel et d'autre part ajouté pour stabiliser la première phase. La valeur 100, notée 100(0) attribuée à l'élément de renfort textile revêtu T0 est, en valeur absolue, différente de celle de l'élément de renfort textile revêtu T1 notée 100-(1), qui est elle-même différente de celle de l'élément de renfort textile revêtu T2 notée 100-(2) et encore différente de celle de l'élément de renfort textile revêtu T3 notée 100-(3).

On cherche à comparer le niveau d'adhésion pour les compositions où l'ammoniaque ajouté pour stabiliser la première phase est remplacé par le phosphate de sodium (E0', E1', E2' et E3') par rapport à une solution de remplacement déjà connue dans laquelle l'ammoniaque ajouté pour stabiliser la première phase est remplacé par l'hydroxyde de sodium (E1", E2" et E3").

Les résultats des tests effectués sur les éléments de renfort textiles revêtus avec les compositions adhésives E0, E1, E1', E1", E2, E2', E2", E3, E3' et E3" sont résumés dans le tableau 2.

Lorsque la composition adhésive aqueuse ne permet pas de faire le test, on a indiqué la mention « NC » pour non conforme.

**Tableau 2**

| **Elément de renfort revêtu** | **Fmax0 base 100-(0)** |
|---|---|
| T0 | 100-(0) |
| T0' | NC |
| | |

| **Elément de renfort revêtu** | **Fmax0 base 100-(1)** |
|---|---|
| T1 | 100-(1) |
| T1' | 83 |
| T1" | 78 |
| | |

| **Elément de renfort revêtu** | **Fmax0 base 100-(2)** |
|---|---|
| T2 | 100-(2) |
| T2' | 78 |
| T2" | 70 |
| | |

| **Elément de renfort revêtu** | **Fmax0 base 100-(3)** |
|---|---|
| T3 | 100-(3) |
| T3' | 91 |
| T3" | 89 |

On constate que pour l'élément de renfort revêtu T0' utilisant une résine à base de résine précondensée SRF 1524 et de formol, la composition adhésive aqueuse n'est pas utilisable comme déjà expliqué dans le test de stabilité.

On constate que les éléments de renfort revêtus T1', T2' et T3' selon l'invention possèdent une force à rupture Fmax0 certes inférieure aux témoins utilisant des compositions adhésives aqueuses à base d'ammoniaque ajouté pour stabiliser la première phase, mais néanmoins suffisantes pour assurer une adhésion satisfaisante et compatible avec une utilisation en pneumatique ou en courroie.

Enfin, la comparaison entre l'adhésion des éléments de renfort revêtus T1', T2' et T3', c'est-à-dire les éléments de renfort revêtus dans lesquels on a remplacé l'ammoniaque ajouté pour stabiliser la première phase par le phosphate de sodium, et l'adhésion des éléments de renfort revêtus T1", T2" et T3", c'est-à-dire les éléments de renfort revêtus dans lesquels on a remplacé l'ammoniaque ajouté pour stabiliser la première phase par l'hydroxyde de sodium montre que l'adhésion est significativement meilleure lorsqu'on utilise des sels de phosphate.

Une autre caractéristique essentielle de l'invention réside donc bien dans le remplacement de l'ammoniaque ajouté pour stabiliser la première phase par des sels de phosphate de sorte à réduire la quantité d'ammoniaque utilisée dans la préparation de la composition adhésive aqueuse.

L'invention ne se limite pas aux modes de réalisation précédemment décrits.

## Revendications

1. Procédé de fabrication d'une composition adhésive aqueuse, **caractérisé en ce que:**
- on prépare une première phase en mélangeant au moins un latex d'élastomère et au moins un sel de phosphate S1;
- on prépare une deuxième phase comprenant une résine à base de:
∘ au moins un composé A1, le composé A1 étant choisi parmi :
• un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
• un composé A12 comprenant au moins un noyau aromatique porteur d'au moins une fonction aldéhyde ou
• un mélange d'un composé A11 et d'un composé A12 ; et
∘ au moins un phénol A2; et
- on prépare la composition adhésive aqueuse en mélangeant la première phase et la deuxième phase de sorte que l'ammoniaque soit à un taux massique inférieur strictement à 0,55% de la composition adhésive aqueuse.

2. Procédé selon la revendication précédente dans lequel on prépare la composition adhésive aqueuse de sorte que l'ammoniaque soit à un taux massique de la composition adhésive aqueuse strictement inférieur à 0,50%, de préférence inférieur ou égal à 0,40%, plus préférentiellement inférieur ou égal à 0,30%, plus préférentiellement inférieur ou égal à 0,20% et encore plus préférentiellement inférieur ou égal à 0,10%.

3. Procédé selon la revendication 1 ou 2, dans lequel on prépare la composition adhésive aqueuse de sorte que l'ammoniaque soit à un taux massique de la composition adhésive aqueuse strictement inférieur ou égal à 0,05%.

4. Procédé selon la revendication 1 ou 2, dans lequel on prépare la composition adhésive aqueuse de sorte que l'ammoniaque soit à un taux massique de la composition adhésive aqueuse supérieur ou égal à 0,05%.

5. Procédé selon l'une quelconque des revendications précédentes, dans lequel le ou chaque sel de phosphate S1 est choisi parmi le phosphate de sodium, le phosphate de potassium et les mélanges de ces phosphates et de préférence est le phosphate de sodium.

6. Procédé selon l'une quelconque des revendications précédentes, dans lequel le taux d'extrait sec du ou des latex d'élastomère(s) dans la composition adhésive aqueuse va de 3,0 à 29,0 %, de préférence de 11,0 à 24,0 % et plus préférentiellement de 13,0 à 21,0 %.

7. Procédé selon l'une quelconque des revendications précédentes, dans lequel on prépare la deuxième phase en mélangeant la résine et au moins une base.

8. Procédé selon la revendication précédente, dans lequel la base est choisie parmi les hydroxydes, les sels de phosphate et les mélanges d'un ou plusieurs hydroxydes et d'un ou plusieurs sels de phosphate.

9. Procédé selon l'une quelconque des revendications précédentes, dans lequel on prépare la composition adhésive aqueuse en mélangeant la première phase et la deuxième phase de sorte que le taux d'extrait sec de la résine dans la composition adhésive aqueuse va de 1,0 à 5,0 %, de préférence de 1,5 à 3,0 % et plus préférentiellement de 2,0 à 4,0 %.

10. Procédé selon l'une quelconque des revendications précédentes, dans lequel on prépare la composition adhésive aqueuse en mélangeant la première phase et la deuxième phase de sorte que le taux d'extrait sec de la composition adhésive aqueuse va de 5% à 60 % et de préférence de 10 à 30 %.

11. Procédé selon l'une quelconque des revendications précédentes, dans lequel on prépare la composition adhésive aqueuse en mélangeant la première phase et la deuxième phase de sorte que le pH de la composition adhésive aqueuse va de 9,0 à 12,0 et de préférence de 10,0 à 11,5.

12. Composition adhésive aqueuse, **caractérisée en ce qu'**elle est obtenue par le procédé selon l'une quelconque des revendications 1 à 11.

13. Elément de renfort, **caractérisé en ce qu'il** est revêtu d'au moins une couche adhésive à base de la composition adhésive aqueuse selon la revendication 12.

14. Pneumatique (1), **caractérisé en ce qu'il** comprend un élément de renfort selon la revendication 13.

15. Courroie (P), **caractérisé en ce qu'**elle comprend un élément de renfort selon la revendication 13.

## Patentansprüche

1. Verfahren zur Herstellung einer wässrigen Klebstoffzusammensetzung, **dadurch gekennzeichnet, dass** man:
- eine erste Phase herstellt, indem man mindestens einen Elastomerlatex und mindestens ein Phosphatsalz S1 mischt;
- eine zweite Phase herstellt, die ein Harz auf Basis von
o mindestens einer Verbindung A1, wobei die Verbindung A1 aus
• einer Verbindung A11 mit mindestens einem aromatischen Kern, der mindestens zwei Funktionen trägt, wobei es sich bei einer dieser Funktionen um eine Hydroxylmethylfunktion handelt und es sich bei der anderen um eine Aldehydfunktion oder eine Hydroxymethylfunktion handelt, oder
• einer Verbindung A12 mit mindestens einem aromatischen Kern, der mindestens eine Aldehydfunktion trägt, oder
• einer Mischung einer Verbindung A11 und einer Verbindung A12
ausgewählt ist; und
o mindestens einem Phenol A2 umfasst; und
- die wässrige Klebstoffzusammensetzung herstellt, indem man die erste Phase und die zweite Phase so mischt, dass wässriges Ammoniak in einem Massenanteil von streng weniger als 0,55 % der wässrigen Klebstoffzusammensetzung vorliegt.

2. Verfahren nach dem vorhergehenden Anspruch, wobei man die wässrige Klebstoffzusammensetzung so herstellt, dass wässriges Ammoniak in einem Massenanteil der wässrigen Klebstoffzusammensetzung von streng weniger als 0,50 %, vorzugsweise kleiner oder gleich 0,40 %, weiter bevorzugt kleiner oder gleich 0,30 %, weiter bevorzugt kleiner oder gleich 0,20 % und noch weiter bevorzugt kleiner oder gleich 0,10 % vorliegt.

3. Verfahren nach Anspruch 1 oder 2, wobei man die wässrige Klebstoffzusammensetzung so herstellt, dass wässriges Ammoniak in einem Massenanteil der wässrigen Klebstoffzusammensetzung von streng kleiner oder gleich 0,05 % vorliegt.

4. Verfahren nach Anspruch 1 oder 2, wobei man die wässrige Klebstoffzusammensetzung so herstellt, dass wässriges Ammoniak in einem Massenanteil der wässrigen Klebstoffzusammensetzung größer oder gleich 0,05 % vorliegt.

5. Verfahren nach einem der vorhergehenden Ansprüche, wobei das bzw. jedes Phosphatsalz S1 aus Natriumphosphat, Kaliumphosphat und Mischungen dieser Phosphate ausgewählt wird und vorzugsweise Natriumphosphat ist.

6. Verfahren nach einem der vorhergehenden Ansprüche, wobei der Feststoffgehalt des Elastomerlatex bzw. der Elastomerlatizes in der wässrigen Klebstoffzusammensetzung im Bereich von 3,0 bis 29,0 %, vorzugsweise von 11,0 bis 24,0 % und weiter bevorzugt von 13,0 bis 21,0 % liegt.

7. Verfahren nach einem der vorhergehenden Ansprüche, wobei man die zweite Phase herstellt, indem man das Harz und mindestens eine Base mischt.

8. Verfahren nach dem vorhergehenden Anspruch, wobei die Base aus Hydroxiden, Phosphatsalzen und Mischungen von einem oder mehreren Hydroxiden und einem oder mehreren Phosphatsalzen ausgewählt wird.

9. Verfahren nach einem der vorhergehenden Ansprüche, bei dem man die wässrige Klebstoffzusammensetzung herstellt, indem man die erste Phase und die zweite Phase so mischt, dass der Feststoffgehalt des Harzes in der wässrigen Klebstoffzusammensetzung im Bereich von 1,0 bis 5,0 %, vorzugsweise von 1,5 bis 3,0 % und weiter bevorzugt von 2,0 bis 4,0 % liegt.

10. Verfahren nach einem der vorhergehenden Ansprüche, bei dem man die wässrige Klebstoffzusammensetzung herstellt, indem man die erste Phase und die zweite Phase so mischt, dass der Feststoffgehalt des Harzes in der wässrigen Klebstoffzusammensetzung im Bereich von 5 % bis 60 % und bevorzugt von 10 bis 30 % liegt.

11. Verfahren nach einem der vorhergehenden Ansprüche, wobei man die wässrige Klebstoffzusammensetzung herstellt, indem man die erste Phase und die zweite Phase so mischt, dass der pH-Wert der wässrigen Klebstoffzusammensetzung im Bereich von 9,0 bis 12,0 und vorzugsweise von 10,0 bis 11,5 liegt.

12. Wässrige Klebstoffzusammensetzung, **dadurch gekennzeichnet, dass** sie durch das Verfahren nach einem der Ansprüche 1 bis 11 erhalten wird.

13. Verstärkungselement, **dadurch gekennzeichnet, dass** es mit mindestens einer Klebstoffschicht auf der Basis der wässrigen Klebstoffzusammensetzung nach Anspruch 12 beschichtet ist.

14. Reifen (1), **dadurch gekennzeichnet, dass** er ein Verstärkungselement nach Anspruch 13 umfasst.

15. Riemen (P), **dadurch gekennzeichnet, dass** er ein Verstärkungselement nach Anspruch 13 umfasst.

## Claims

1. Process of manufacturing an aqueous adhesive composition, **characterized in that:**
- a first phase is prepared by mixing at least one elastomer latex and at least one phosphate salt S1;
- a second phase is prepared comprising a resin based on:
o at least one compound A1, the compound A1 being selected from:
• a compound A11 comprising at least one aromatic ring bearing at least two functions, one of these functions being a hydroxymethyl function, the other being an aldehyde function or a hydroxymethyl function or
• a compound A12 comprising at least one aromatic ring and bearing at least one aldehyde function or
• a mixture of a compound A11 and a compound A12; and
o at least one phenol A2; and
- the aqueous adhesive composition is prepared by mixing the first phase and the second phase so that the aqueous ammonia is at a weight content of strictly less than 0.55% of the aqueous adhesive composition.

2. Process according to the preceding claim, in which the aqueous adhesive composition is prepared so that the aqueous ammonia is at a weight content of the aqueous adhesive composition of strictly less than 0.50%, preferably less than or equal to 0.40%, more preferentially less than or equal to 0.30%, more preferentially less than or equal to 0.20% and more preferentially still less than or equal to 0.10%.

3. Process according to Claim 1 or 2, in which the aqueous adhesive composition is prepared so that the aqueous ammonia is at a weight content of the aqueous adhesive composition of strictly less than or equal to 0.05%.

4. Process according to Claim 1 or 2, in which the aqueous adhesive composition is prepared so that the aqueous ammonia is at a weight content of the aqueous adhesive composition of greater than or equal to 0.05%.

5. Process according to any one of the preceding claims, in which the or each phosphate salt S1 is selected from sodium phosphate, potassium phosphate and mixtures of these phosphates and preferably is sodium phosphate.

6. Process according to any one of the preceding claims, in which the solids content of the latex or latices of elastomer(s) in the aqueous adhesive composition ranges from 3.0% to 29.0%, preferably from 11.0% to 24.0% and more preferentially from 13.0% to 21.0%.

7. Process according to any one of the preceding claims, in which the second phase is prepared by mixing the resin and at least one base.

8. Process according to the preceding claim, in which the base is chosen from hydroxides, phosphate salts and mixtures of one or more hydroxides and of one or more phosphate salts.

9. Process according to any one of the preceding claims, in which the aqueous adhesive composition is prepared by mixing the first phase and the second phase so that the solids content of the resin in the aqueous adhesive composition ranges from 1.0% to 5.0%, preferably from 1.5% to 3.0% and more preferentially from 2.0% to 4.0%.

10. Process according to any one of the preceding claims, in which the aqueous adhesive composition is prepared by mixing the first phase and the second phase so that the solids content of the aqueous adhesive composition ranges from 5% to 60% and preferably from 10% to 30%.

11. Process according to any one of the preceding claims, in which the aqueous adhesive composition is prepared by mixing the first phase and the second phase so that the pH of the aqueous adhesive composition ranges from 9.0 to 12.0 and preferably from 10.0 to 11.5.

12. Aqueous adhesive composition, **characterized in that** it is obtained by the process according to any one of Claims 1 to 11.

13. Reinforcing element, **characterized in that** it is coated with at least one adhesive layer based on the aqueous adhesive composition according to Claim 12.

14. Tyre (1), **characterized in that** it comprises a reinforcing element according to Claim 13.

15. Belt (P), **characterized in that** it comprises a reinforcing element according to Claim 13.
